# EUROPEAN PATENT APPLICATION

(11) **EP 1 376 028 A2**
(43) Date of publication of application: **02.01.2004**
(21) Application number: 02257537.7
(22) Date of filing: 30.10.2002
(51) Int. Cl.: F24J 2/34, F28F 13/00

(54) **Solar energy collecting device with a thermal conductor, and water heating apparatus using the solar energy collecting device**

(30) Priority: 28.06.2002 CN 21204485
(71) Applicant: Orra Corporation, Santa Clara, San Diego, CA 95054 (US)
(72) Inventor: Luo, Chin-Kuang, Chung Dist., Taichung City (TW)
(74) Representative: Hector, Annabel Mary

(57) **Abstract**

A solar energy collecting device includes a housing (3) confining a receiving space (33) and formed with an opening (31) for access into the receiving space (33). The housing (3) has a transparent side wall. A thermal conductor (4) has a heat-absorbing portion (412) disposed in the receiving space (33) of the housing (3), and a heat-radiating portion (413) extending out of the receiving space (33) via the opening (31). The thermal conductor (4) includes a hollow heat-conducting member (41) that defines a sealed chamber (411) therein and that is formed with a thermal conductor layer (42) in the chamber (411). The heat-absorbing portion (412) absorbs solar energy when the housing (3) is irradiated by solar radiation, and transmits the solar energy to the heat-radiating portion (413).

## Description

This application claims priority of China Patent Application No. 02124485.5, filed on June 28, 2002.

The invention relates to a solar energy collecting device, more particularly to a solar energy collecting device with a thermal conductor.

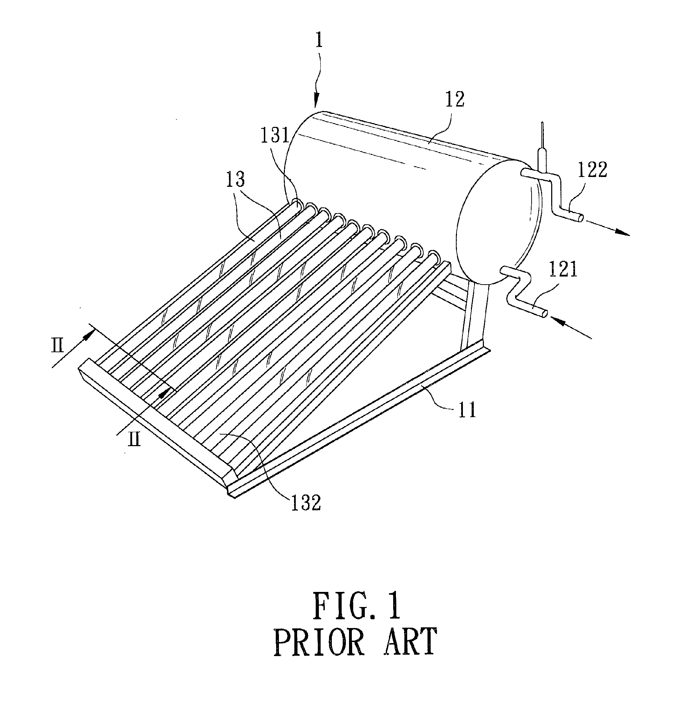

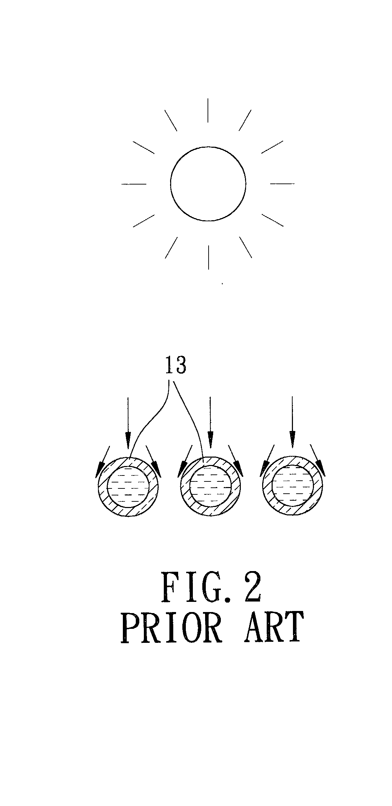

Figure 1 illustrates a conventional water heating apparatus 1 that includes a base frame 11, a water tank 12 mounted on one side of the base frame 11 and having a water inlet 121 and a water outlet 122, and a plurality of heat-absorbing pipes 13 disposed inclinedly between the water tank 12 and the other side of the base frame 11. Each heat-absorbing pipe 13 has a connecting end 131 connected to and in fluid communication with the water tank 12, and a closed end 132 opposite to the connecting end 131 and disposed lower than the connecting end 131. When the heat-absorbing pipes 13 are irradiated by solar radiation (as indicated by arrows in Figure 2), due to the reason that cool water has a specific gravity larger than that of hot water, heating circulation is thus possible by virtue of the downwardly flowing cool water and upwardly flowing hot water.

The following are some of the drawbacks of the conventional water heating apparatus 1:
1. Each heat-absorbing pipe 13 has a curved heat-absorbing surface that reflects solar radiation, thereby resulting in an inferior heat-absorbing efficiency.
2. As the cool and hot water flow in opposite directions in the pipes 13, a great amount of heat loss can occur during thermal conduction.
3. Since scales are easily generated in the heat-absorbing pipes 13, in order to maintain better heat-conducting efficiency, periodic cleaning and maintenance are required.

Therefore, an object of the present invention is to provide a solar energy collecting device with a thermal conductor and a water heating apparatus using the solar energy collecting device.

According to one aspect of the present invention, a solar energy collecting device comprises:
a housing confining a receiving space and formed with an opening for access into the receiving space, the housing having a transparent side wall; and
a thermal conductor having a heat-absorbing portion disposed in the receiving space of the housing and a heat-radiating portion extending out of the receiving space via the opening, the thermal conductor including a hollow heat-conducting member that defines a sealed chamber therein and that is formed with a thermal conductor layer in the chamber, the heat-absorbing portion absorbing solar energy when the housing is irradiated by solar radiation and transmitting the solar energy to the heat-radiating portion.

According to another aspect of the present invent ion, a water heating apparatus comprises:
a water tank having a water inlet and a water outlet; and
a solar energy collecting device including
   a housing confining a receiving space and formed with an opening for access into the receiving space, the housing having a transparent side wall, and
   a thermal conductor having a heat-absorbing portion disposed in the receiving space of the housing and a heat-radiating portion extending out of the receiving space via the opening and into the water tank, the thermal conductor including a hollow heat-conducting member that defines a sealed chamber therein and that is formed with a thermal conductor layer in the chamber, the heat-absorbing portion absorbing solar energy when the housing is irradiated by solar radiation and transmitting the solar energy to the heat-radiating portion for heating water in the water tank.

Other features and advantages of the present invention will become apparent in the following detailed description of the preferred embodiments with reference to the accompanying drawings, of which:
Figure 1 is a perspective view showing a conventional water heating apparatus;
Figure 2 is a schematic sectional view showing heat-absorbing pipes of the conventional water heating apparatus taken along line II-II in Figure 1;
Figure 3 is a perspective view showing the first preferred embodiment of a water heating apparatus according to the present invention;
Figure 4 is an exploded perspective view showing a solar energy collecting device of the first preferred embodiment;
Figure 5 is schematic sectional view showing the solar energy collecting device of the first preferred embodiment;
Figure 6 is a perspective view showing a solar energy collecting device of the second preferred embodiment of a water heating apparatus according to the present invention; and
Figure 7 is a schematic sectional view showing the solar energy collecting device of the second preferred embodiment.

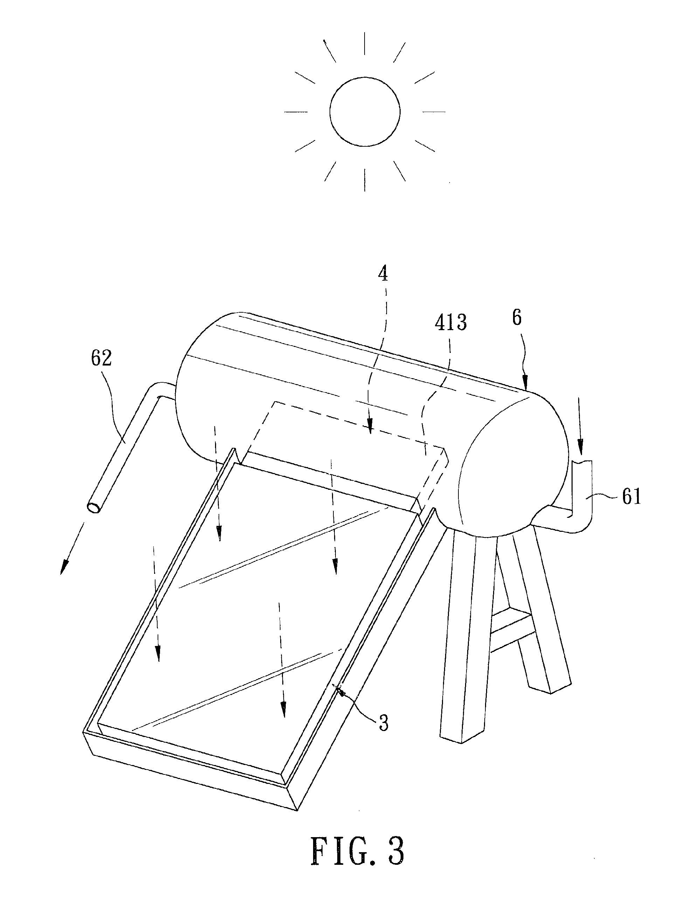

Referring to Figure 3, the first preferred embodiment of a water heating apparatus 6 according to the present invention is shown to include a water tank 6, and a solar energy collecting device.

The water tank 6 is mounted on a supporting frame, and has a water inlet 61 and a water outlet 62.

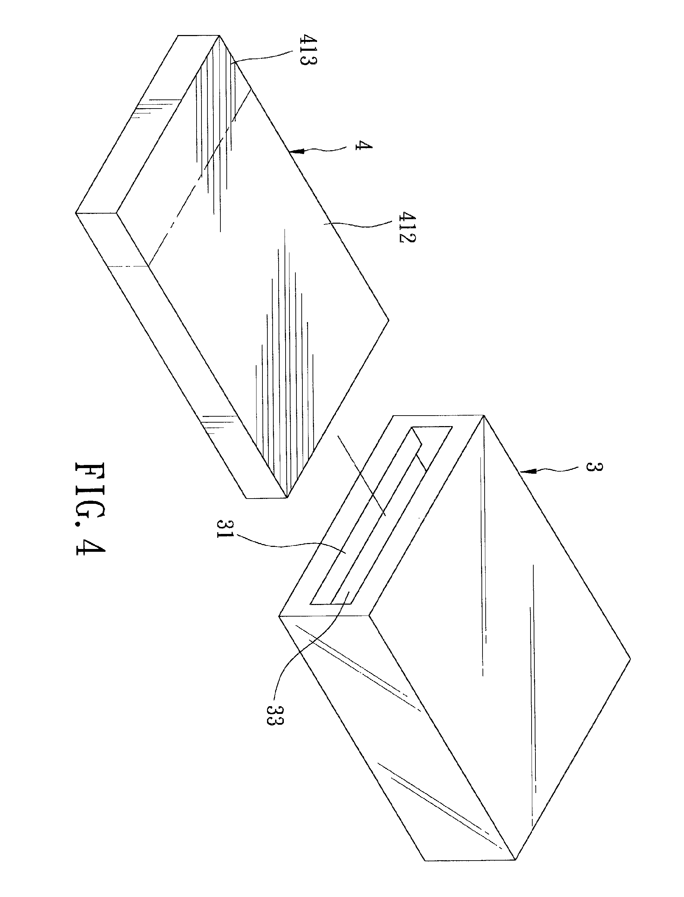

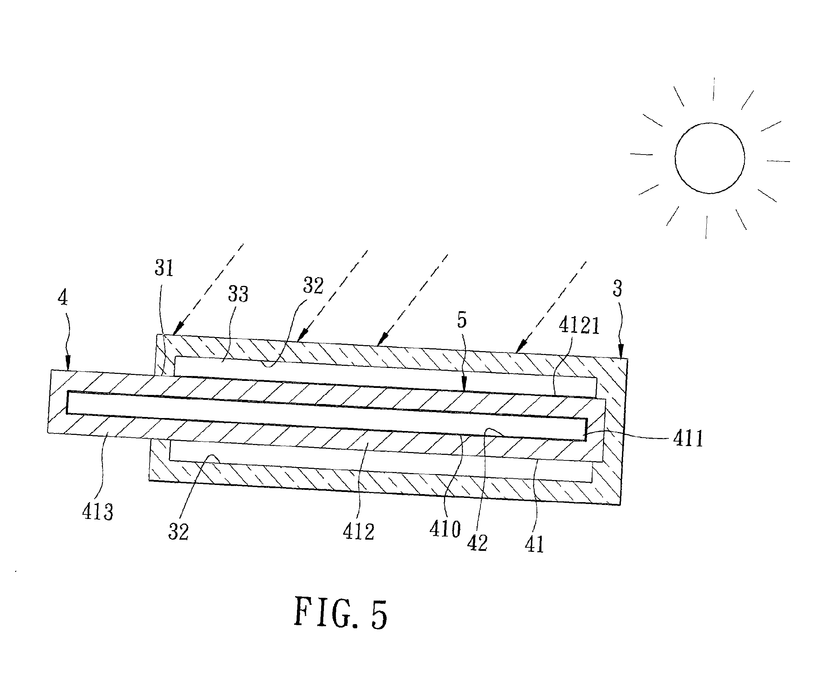

Referring further to Figures 4 and 5, the solar energy collecting device includes a housing 3 and a thermal conductor 4 . The housing 3 has an inner surface 32 that confines a receiving space 33, and is formed with an opening 31 for access into the receiving space 33. In this embodiment, the housing 3, which is rectangular, is formed integrally from a transparent material, such as reinforced glass or heat-resistant transparent plastic. The thermal conductor 4 has a heat-absorbing portion 412 disposed in the receiving space 33 of the housing 3, as shown in Figure 5, and a heat-radiating portion 413 extending out of the receiving space 33 via the opening 31 and into the water tank 6, as shown in Figure 3. The thermal conductor 4 includes a hollow heat-conducting member 41, which is a rectangular member, that defines a sealed chamber 411 therein and that is formed with a thermal conductor layer 42 in the chamber 411 (see Figure 5). It is noted that the thermal conductor layer 42 consists of a superconductor that includes at least one compound selected from the group consisting of sodium peroxide, sodium oxide, beryllium oxide, manganese sesquioxide, aluminum dichromate, calcium dichromate, boron oxide, dichromate radical, and combinations thereof ; at least one compound selected from the group consisting of cobaltous oxide, manganese sesquioxide, beryllium oxide, strontium chromate, strontium carbonate, rhodium oxide, cupric oxide, β-titanium, potassium dichromate, boron oxide, calcium dichromate, manganese dichromate, aluminumdichromate, dichromate radical, and combinations thereof; or at least one compound selected from the group consisting of denatured rhodium oxide, potassium dichromate, denatured radium oxide, sodium dichromate, silver dichromate, monocrystalline silicon, beryllium oxide, strontium chromate, boron oxide, sodium peroxide, β-titanium, a metal dichromate, and combinations thereof. The superconductor forms a lining serving as the thermal conductor layer 42 on an inner surface 410 of the heat-conducting member 41 via known techniques (see Figure 2).

Moreover, the heat-absorbing portion 412 of the thermal conductor 4 has an outer surface 4121 that is further formed with a heat-absorbing film 5 for enhancing the heat-absorbing efficiency of the thermal conductor 4. It is noted that the heat-absorbing film 5 is preferably formed by magnetically controlled sputtering.

The heat-absorbing portion 412 of the thermal conductor 4 absorbs solar energy when the housing 3 is irradiated by solar radiation, and then transmits the solar energy to the heat-radiating portion 413 for heating water in the water tank 6.

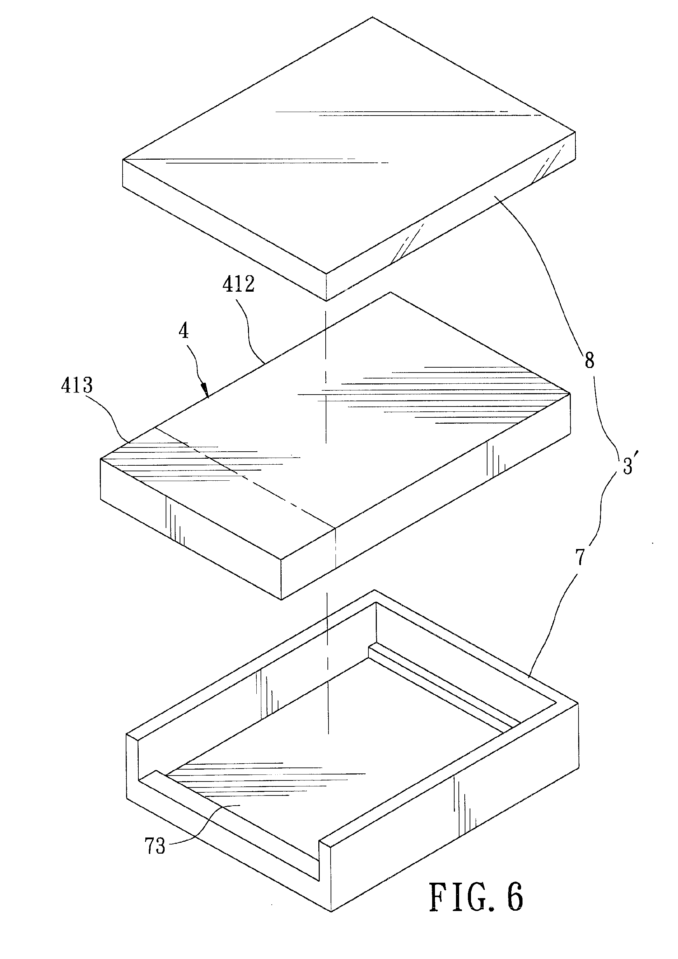

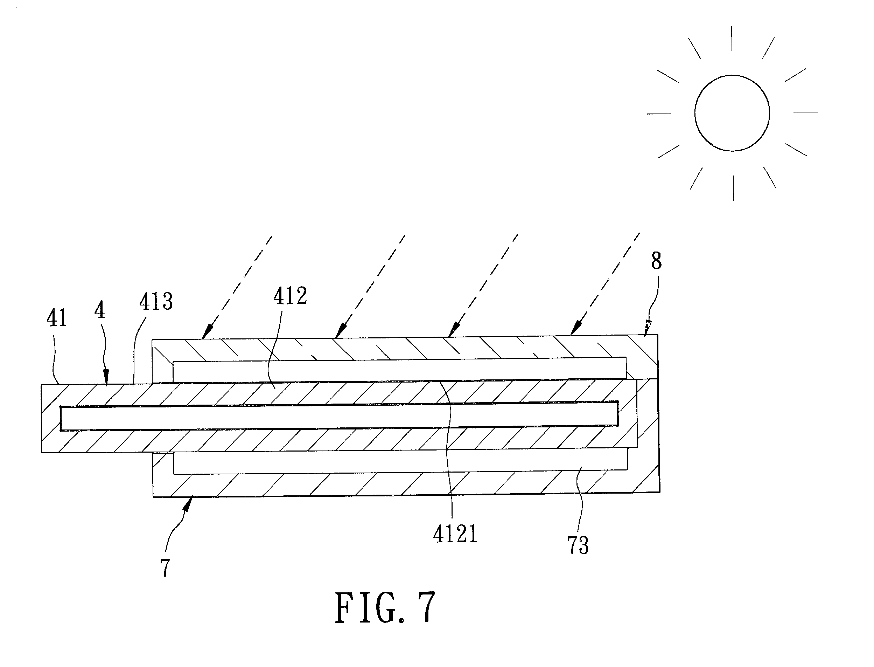

Figures 6 and 7 illustrate a solar energy collecting device of the second preferred embodiment of a water heating apparatus according to the present invention, which is a modification of the first preferred embodiment. Unlike the previous embodiment, the housing 3' includes a base body 7, and a transparent cover 8 mounted on the base body 7. The base body 7 and the transparent cover 8 confine the receiving space 73. The transparent cover 8 is made of reinforced glass or heat-resistant transparent plastic.

The following are some of the advantages attributed to the water heating apparatus of the present invention:
1. The whole area of the outer surface 4121 of the heat-absorbing portion 412 of the hollow heat-conducting member 41 can serve as a heat-absorbing area, thereby resulting in a superior heat-absorbing efficiency.
2. Due to the presence of the thermal conductor 4, the solar energy absorbed at the heat-absorbing portion 412 can be transmitted to the heat-radiating portion 413 with high efficiency so as to reduce the heat loss commonly encountered in the aforesaid prior art.
3. The solar energy collecting device of the present invention utilizes the thermal conductor 4 as a heat-conducting medium rather than water such that the problem of scaling in the aforesaid prior art does not occur.

## Claims

1. A solar energy collecting device, **characterized by**:
a housing (3) confining a receiving space (33) and formed with an opening (31) for access into said receiving space (33), said housing (3) having a transparent side wall; and
a thermal conductor (4) having a heat-absorbing portion (412) disposed in said receiving space (33) of said housing (3) and a heat-radiating portion (413) extending out of said receiving space (33) via said opening (31), said thermal conductor (4) including a hollowheat-conducting member (41) that defines a sealed chamber (411) therein and that is formed with a thermal conductor layer (42) in said chamber (41), said heat-absorbing portion (412) absorbing solar energy when said housing (3) is irradiated by solar radiation and transmitting the solar energy to said heat -radiating portion (413).

2. The solar energy collecting device as claimed in Claim 1, **characterized in that** said housing (3) is formed integrally from a transparent material.

3. The solar energy collecting device as claimed in Claim 1, further **characterized in that** said housing (3') includes a base body (7) , and a transparent cover (8) mounted on said base body (7) and serving as said transparent side wall.

4. The solar energy collecting device as claimed in Claim 1, further **characterized in that** said housing (3) is a rectangular housing and said heat-conducting member (41) is a rectangular member.

5. The solar energy collecting device as claimed in Claim 1, further **characterized in that** said heat-absorbing portion (412) of said thermal conductor (4) has an outer surface (4121) formed with a heat-absorbing film (5) .

6. The solar energy collecting device as claimed in Claim 5, wherein said heat-absorbing film (5) is formed by sputtering.

7. A water heating apparatus, **characterized by**:
a water tank (6) having a water inlet (61) and a water outlet (62); and
a solar energy collecting device including
a housing (3) confining a receiving space (33) and formed with an opening (31) for access into said receiving space (33), said housing (3) having a transparent side wall, and
a thermal conductor (4) having a heat-absorbing portion (412) disposed in said receiving space (33) of said housing (3) and a heat-radiating portion (413) extending out of said receiving space (33) via said opening (31) and into said water tank (6), said thermal conductor (4) including a hollow heat-conducting member (41) that defines a sealed chamber (411) therein and that is formed with a thermal conductor layer (42) in said chamber (411), said heat-absorbing portion (412) absorbing solar energy when said housing (3) is irradiated by solar radiation and transmitting the solar energy to said heat-radiating portion (413) for heating water in said water tank (6).

8. The water heating apparatus as claimed in Claim 7, **characterized in that** said housing (3) is formed integrally from a transparent material.

9. The water heating apparatus as claimed in Claim 7, further **characterized in that** said housing (3') includes a base body (7), and a transparent cover (8) mounted on said base body (7) and serving as said transparent side wall.

10. The water heating apparatus as claimed in Claim 7, further **characterized in that** said housing (3) is a rectangular housing and said heat-conducting member (41) is a rectangular member.

11. The water heating apparatus as claimed in Claim 7, further **characterized in that** said heat-absorbing portion (412) of said thermal conductor (4) has an outer surface (4121) formed with a heat-absorbing film (5).

12. The water heating apparatus as claimed in Claim 11, further **characterized in that** said heat-absorbing film (5) is formed by sputtering.
